# EUROPEAN PATENT APPLICATION

(11) **EP 4 134 155 A1**
(43) Date of publication of application: **15.02.2023**
(21) Application number: 22183713.1
(22) Date of filing: 08.07.2022
(51) Int. Cl.: B01D 61/36, B01D 63/06

(54) **EFFICIENT AND CONTINUOUS TUBULAR MEMBRANE PERVAPORATION SEPARATION SYSTEM AND METHOD**

(30) Priority: 12.08.2021 CN 202110926259
(71) Applicant: HYLEIN ENERGY AND ENVIRONMENT TECHNOLOGY CO., LTD., 510000 Guangzhou City Guangdong (CN)
(72) Inventor: Li, Anwu, Guangzhou, 510000 (CN)
(74) Representative: Süle, Ákos

(57) **Abstract**

A tubular membrane pervaporation separation system, comprising a heater, one or multiple membrane separators arranged in parallel, a condenser and a vacuum pump; the separator comprises a vacuum vessel, a concurrent heating vessel and one or multiple pervaporation lines arranged in parallel; the line comprises membrane tube bundle modules and concurrent heating modules connected in series or in a series-parallel hybrid form, in the line, the membrane tube bundle modules are arranged between two adjacent concurrent heating modules; the vacuum vessel is connected to the condenser and the vacuum pump in sequence; the concurrent heating vessel is provided with an inlet and an outlet; one end of the line is connected to the heater and the other end is used to discharge; the modules are placed respectively in the vacuum vessel and the concurrent heating vessel, comprise one or multiple membrane tubes and concurrent heating tubes arranged in parallel respectively.

## Description

### CROSS-REFERENCE TO RELATED APPLICATIONS

This application claims the benefit and priority of Chinese patent application No. 202110926259.9, filed on Aug. 12th, 2021, disclosure of which is hereby incorporated by reference in its entirety.

### TECHNICAL FIELD

The Invention relates to the technical field of pervaporation separation, particularly to an efficient and continuous tubular membrane pervaporation separation system and method.

### BACKGROUND

The massive emission of greenhouse gases aggravates the greenhouse effect, and the resulting global warming has led to frequent natural disasters, bringing more and more threats to the survival of human beings. To solve this problem, the United Nations has formulated the Framework Convention on Climate Change to control the emission of greenhouse gases, prevent temperature rise and protect the ecology and the environment. China, as a major party to the Convention, has pledged to peak carbon emissions by 2035 and reach carbon neutrality by 2060, and has formulated strict emission standards and plans to regulate energy consumption and carbon emissions in all fields. Therefore, energy saving and emission reduction has become important considerations and goals for industries.

So far, the chemical industry, including petrochemical, is the largest energy consumer, which accounts for more than 30% of the energy consumed by all the industries. Therefore, separation processes in the chemical industry, such as distillation and other high energy-consuming separation processes, face severe challenges and needs technological upgrades to realize energy saving and emission reduction. Compared with traditional distillation process, the membrane pervaporation process has advantages such as low energy consumption and has been widely used in the separation and dehydration of organic solvents.

In the process of membrane pervaporation, some components in the liquid feed permeate through the membrane and evaporate. The evaporation process requires a lot of heat, which causes the temperature of the liquid feed in the membrane tube to gradually drop with the process of pervaporation. Therefore, concurrent heating is required to maintain the temperature of the liquid feed. This repeated process of pervaporation and concurrent heating can ensure that the pervaporation process is carried out at appropriate temperature, so that the membrane permeation separation rate will not decrease due to temperature drop. For the above-mentioned membrane pervaporation separation system, it requires dozens or even hundreds of repetitions of the pervaporation-concurrent heating cycle to meet the separation requirements set, thus significantly increasing the complexity of the pervaporation system.

In order to solve the problem of concurrent heating for liquid feed, personnel of the industry has designed and tried various composition modes of membrane module and operation modes. For example, the Chinese patent applications with publication numbers CN109999669A and CN110759844A have disclosed a kind of batch-type pervaporation operation and its application. In the method, the temperature of the liquid feed tank can be maintained within a set range by means of external heating, and a circulating pump is provided to make the liquid feed pass through the membrane module quickly. On one hand, the liquid feed can maintain in a highly turbulent state in the membrane module, so that concentration polarization at the feed side of the membrane is basically eliminated and the membrane pervaporation process is always under high-efficiency. On the other hand, the high flow rate also reduces the residence time of the liquid feed in the membrane module, thus reducing the magnitude of temperature drop of the liquid feed in the membrane module due to the pervaporation and separation of some components therein. In this way, the temperature of the liquid feed in the membrane module is controlled within a certain range, and the permeation rate of the membrane will not decrease significantly due to temperature drop. The liquid feed then circulates back to the liquid feed tank to be heated after passing through the membrane module, and the circulation goes on until the liquid in the liquid feed tank reaches the required purity, and the pervaporation separation process is thus completed. In this operation mode, it is easy and convenient to carry out concurrent heating for the liquid feed, which is especially suitable for the batch and intermittent supply of liquid feed. However, if the liquid feed is supplied continuously, since the liquid feed passing through the membrane module once cannot meet the separation requirements after only one pervaporation, this batch-type operation cannot meet the requirements for continuous feeding properly.

The Chinese patent with publication number of CN100408531A discloses a continuous process of membrane pervaporation, and another Chinese patent with publication number CN103551036B also discloses a similar continuous process, wherein the membrane pervaporation system consists of multiple membrane modules and concurrent heaters connected in series. The liquid feed passes through a membrane module for pervaporation, and is then heated by the concurrent heater connected at the rear, and the repetition goes on until the separation requirements are met. These processes can meet the requirements for continuous pervaporation, and also take into account the requirements for concurrent heating of the liquid feed and control the operating temperature for pervaporation within a certain range. However, the pervaporation process requires a lot of membrane modules and concurrent heaters to be connected in series, resulting in complexity, large footprint and high cost of the whole system. Moreover, neither of these two patented technical schemes takes into account the influence of the flow state of the liquid feed on the permeability of membranes. For membranes with high permeability, the velocity of the liquid feed must be higher than a certain speed, so that the liquid feed can maintain in a highly turbulent state, which can help eliminate the concentration polarization in the membrane module and ensure that the membrane module always stay in a high-efficient operation state. However, by improving the velocity of the liquid feed, it means that the residence time of the liquid feed in the membrane module is shortened, and the number of membrane modules and concurrent heaters connected in series needs to be increased accordingly to meet the separation requirements, which will make the system even more complicated and costly.

To sum up, the normally used processes currently for membrane pervaporation separation include batch processes and continuous processes. For a batch process, generally no concurrent heaters are needed. It has simple and compact structure and the operation is easy and flexible, and it can adapt to various composition of feeds and meet different separation requirements. But the batch process cannot meet the needs of continuous feeding, and when the batch process requires two-stage vacuum, it is more difficult to control. For continuous processes of pervaporation, especially the dehydration applications, the vaporization requires a large amount of heat, so concurrent heating is required to maintain the temperature for the pervaporation process. At present, the commonly used continuous process for pervaporation is to connect membrane modules and concurrent heating modules in series. The liquid feed enters from the inlet, goes through membrane pervaporation separation, gets heated by the concurrent heaters, and then goes to the next stage of pervaporation-concurrent heating until the liquid feed reaches the required purity. Eventually, the liquid retentate becomes the product. This continuous separation mode generally has following disadvantages: low velocity of liquid feed, severe concentration polarization, and low-efficient operation of membrane pervaporation; large temperature drop of liquid feed along the flow direction, which reduces the average temperature of pervaporation and thereby reduces the efficiency of pervaporation process; the need for series connection of multi-stage membrane modules and concurrent heaters when the separation requirement is high, which results in complicated systems, increased equipment cost, larger footprint and increased energy consumption.

### SUMMARY

In view of the problems of the prior art, including that batch process of membrane pervaporation separation cannot meet the requirement for continuous feeding and the continuous process of membrane pervaporation separation has complicated systems and equipment, large footprint and low-efficiency operation, the purpose of the Invention is to provide an efficient and continuous tubular membrane pervaporation separation system and method.

To achieve the above purpose, the technical scheme of the Invention is as follows:

In one aspect, the Invention provides an efficient and continuous tubular membrane pervaporation separation system, comprising a heater, one or multiple membrane separators arranged in parallel, a condenser and a vacuum pump;

wherein, the membrane separator comprises a vacuum vessel, a concurrent heating vessel and one or multiple pervaporation lines arranged in parallel; the pervaporation line comprises multiple membrane tube bundle modules and concurrent heating modules connected in series or in a series-parallel hybrid form, and in the pervaporation line, the one or multiple membrane tube bundle modules are arranged between two adjacent concurrent heating modules; the vacuum vessel is connected to the inlet end of the condenser through a pipeline, and the outlet end of the condenser is connected to the vacuum pump through a pipeline; the concurrent heating vessel is fixedly connected to the vacuum vessel, and the concurrent heating vessel is provided with a heating medium inlet and a heating medium outlet; one end of the pervaporation line is connected to the heater through a feed pipe, and the other end is used to discharge through a discharge pipe;

wherein, the membrane tube bundle module is placed in the vacuum vessel, and the membrane tube bundle module comprises one or multiple membrane tubes arranged in parallel; the concurrent heating module is placed in the concurrent heating vessel, and the concurrent heating module comprises one or multiple concurrent heating tubes arranged in parallel; and the number of the membrane tubes of the membrane tube bundle module is the same as that of the concurrent heating tubes of the concurrent heating module, so that the membrane tube bundle module can be connected to the concurrent heating module.

Furthermore, the system further comprises a heat exchanger; the heat exchanger comprises a cold medium pipe and a hot medium pipe; the inlet end of the hot medium pipe is connected to the discharge pipe, and the outlet end of the cold medium pipe is connected to the heater through a pipeline;

Furthermore, the system further comprises a metering pump and a cooler; the outlet end of the metering pump is connected to the inlet end of the cold medium pipe in the heat exchanger through a pipeline; the inlet end of the cooler is connected to the outlet end of the hot medium pipe in the heat exchanger through a pipeline.

Preferably, when two or more membrane tube bundle modules are arranged between two adjacent concurrent heating modules, the two or more membrane tube bundle modules are connected in series through connecting modules; the connecting module is placed in the vacuum vessel and comprises one or multiple connecting tubes arranged in parallel, and the number of the connecting tubes of the connecting module is the same as that of the membrane tubes of the membrane tube bundle module, so that the connecting module can be connected to the membrane tube bundle module.

Preferably, the bottom surface of the vacuum vessel and the top surface of the concurrent heating vessel are both open, and the bottom surface of the vacuum vessel and the top surface of the concurrent heating vessel are sealed with a partition plate and fixedly connected.

Furthermore, the membrane tube bundle module further comprises a tube bundle plate; the tube bundle plate is provided with mounting holes for installing the membrane tubes and is fixedly connected to the vacuum vessel with flanges.

Preferably, in the pervaporation line, the number of parallel membrane tubes in the membrane tube bundle module remains unchanged or decreases successively from upstream to downstream.

In another aspect, the Invention also provides an efficient and continuous tubular membrane pervaporation separation method which is applied to the above system, and the method comprises the following steps:
determining the number of membrane separators arranged in parallel and the number of membrane tubes connected in parallel in the membrane tube bundle module according to the requirements for the processing speed of the liquid feed and the processing capacity of the membrane separator, determining the length of the membrane tube or the number of membrane tubes connected in series between adjacent concurrent heating tubes according to the requirements for temperature drop of the liquid feed in the membrane tube, and determining the total length of membrane tubes connected in series in the membrane separator according to the purity requirements for the final liquid product;
feeding the liquid feed into the heater and heating the liquid feed to the preset temperature;
feeding the liquid feed heated to the preset temperature into the membrane separators arranged in parallel for pervaporation separation, so that the liquid product in compliance with requirements can be produced from the liquid feed after pervaporation separation, and while conducting pervaporation separation, feeding the heating medium into the membrane separator so that the liquid feed can be heated while flowing through the concurrent heating modules to maintain the temperature required;
while feeding the liquid feed into the membrane separator for pervaporation separation, starting the vacuum pump. The steam generated in the membrane separator due to the pervaporation separation is condensed by the condenser and then discharged, and the vacuum pump draws out the non-condensable gas in the vacuum vessel and maintains the degree of vacuum in the membrane separator.

Preferably, the length of the membrane tubes is properly arranged so that the temperature drop of the liquid feed is controlled within the range of 20°C.

Furthermore, the method further comprises: feeding the liquid feed before being heated by the heater and the liquid product flowing out from the membrane separator into the cold medium pipe and the hot medium pipe of the heat exchanger respectively, so as to utilize the waste heat of the liquid product to preheat the liquid feed.

By adopting the above-mentioned technical scheme, the beneficial effects of the Invention lie in that:
1. In the system provided by the Invention, since the membrane tube bundle module and the concurrent heating module are placed in the membrane separator together, the liquid feed can flow unhinderedly in the membrane separator, thus maintaining the flow rate of the liquid feed, reducing and eliminating concentration polarization, ensuring the high-efficient operation of pervaporation separation process all the time, thereby reducing the total membrane area of the membrane tube bundle module connected in series;
2. In the system provided by the Invention, since the membrane tube bundle module and the concurrent heating module are integrated in the membrane separator, the footprint of the system and equipment is reduced, so are the equipment investment and cost;
3. In the system provided by the Invention, the liquid feed is able to meet the goal of separation after one circulation. After determining the temperature and vacuum degree of the pervaporation process, the requirements for product purity can be achieved by adjusting the total length of the membrane tube bundle modules connected in series, and processing capacity of membrane pervaporation can be improved by connecting more membrane separators in parallel, thus facilitating modular design and operation, reducing the cost of design, installation and operation, and making it easier for commercial application;
4. In the system provided by the Invention, the concurrent heating module is connected after the membrane tube bundle module to realize timely concurrent heating of the liquid feed, and the temperature drop of the liquid feed in the membrane tube bundle module can be controlled in an appropriate range by adjusting the length of the membrane tube bundle module, thus reducing the temperature drop of the liquid feed at the feed side of the membrane tube bundle module, and improving the average temperature of the membrane pervaporation process accordingly, thereby further enhancing the membrane permeation efficiency.

### BRIEF DESCRIPTION OF DRAWINGS

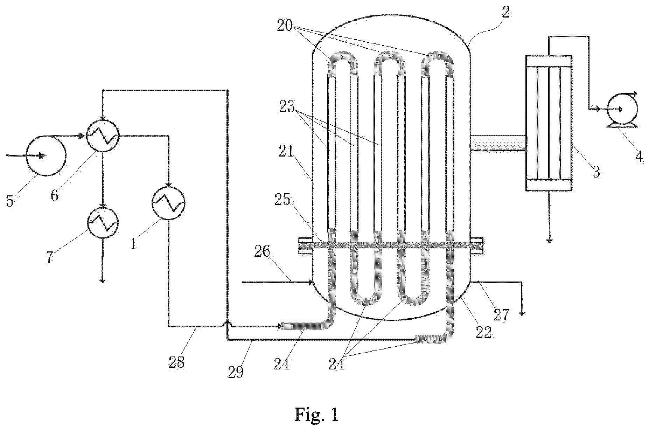

Fig. 1 is the diagram for the efficient and continuous tubular membrane pervaporation separation system of the Invention.

In the figure: 1-heater, 2-membrane separator, 20-connecting module, 21-vacuum vessel, 22-concurrent heating vessel, 23-membrane tube bundle module, 24-concurrent heating module, 25-partition plate, 26-heating medium inlet pipe, 27-heating medium outlet pipe, 28-feed pipe, 29-discharge pipe, 3-condenser, 4-vacuum pump, 5-metering pump, 6-heat exchanger, 7-cooler.

### DETAILED DESCRIPTION

The Invention is further described in combination with drawings and embodiments as follows. It should be noted that, the description of these embodiments is for providing further understanding of the Invention, and does not form a restriction therefor. Moreover, the technical features related to the embodiments of the Invention described as follows can combine with each other provided that they are not conflicted with each other.

It should be noted that, in the description of the Invention, the terms such as "up", "down", "left", "right", "front", "rear" used to indicate orientation or position are description of the structure of the Invention in combination with the drawings, and are used only for convenience to describe the Invention, rather than indicating or implying that the indicated device or element must have a specific orientation, or be constructed and operated in a specific orientation, and therefore should not be construed as limitation to the Invention.

For the "first" and "second" in the technical scheme, they are only used for distinction of the same or similar structures, or the corresponding structures with similar functions, instead of prioritizing these structures, nor sequencing, comparison or else.

In addition, unless otherwise explicitly specified and limited, the terms "install" and "connect" should be understood in a broad sense. For example, connection may be fixed connection, detachable connection, or integral connection; it may be mechanical connection, or electric connection; it may be direct connection, or indirect connection through an intermediate medium, and it may be internal connection of two structures. For those of ordinary skill in the art, the specific meanings of the above terms in the Invention can be understood according to the general idea of the Invention and the specific circumstances of the context of the scheme.

### Embodiment 1

An efficient and continuous tubular membrane pervaporation separation system as shown in Fig. 1, comprising a heater 1, one or multiple membrane separators 2 arranged in parallel, a condenser 3 and a vacuum pump 4.

In the Embodiment, only one membrane separator 2 is arranged so as to be suitable for the applications that require low processing speed of the liquid feed. When in operation, the liquid feed is fed into the heater 1 from the upstream, heated by the heater 1 to the preset temperature, and then fed into the membrane separator 2 through the pipeline for pervaporation separation, and flows out from the membrane separator 2 as liquid retentate (liquid product) after meeting the separation requirements. The separated and vaporized component in membrane separator 2 is condensed by the condenser 3 and then discharged, and meanwhile the vacuum pump 4 draws out the non-condensable gas and maintain the degree of vacuum in the membrane separator 2.

Specifically, the membrane separator 2 comprises a vacuum vessel 21, a concurrent heating vessel 22 and one or multiple pervaporation lines arranged in parallel. Similarly, in the Embodiment, only one pervaporation line is arranged so as to be suitable for the applications that require low processing speed of the liquid feed.

Wherein, the pervaporation line comprises multiple membrane tube bundle modules 23 and concurrent heating modules 24 connected in series or in a series-parallel hybrid form. In the pervaporation line, one or multiple membrane tube bundle modules 23 are arranged between two adjacent concurrent heating modules 24. For example, in the Embodiment, two membrane tube bundle modules 23 are arranged between two adjacent concurrent heating modules 24. It can be understood that the specific number of the membrane tube bundle modules 23 arranged between the two adjacent concurrent heating modules 24 should be determined according to the temperature drop of the liquid feed in the membrane tube bundle modules 23. For example, if the temperature drop is small, more membrane tube bundle modules 23 can be arranged, otherwise, less membrane tube bundle modules 23 can be arranged. In addition, one end of the pervaporation line is connected to the above-mentioned heater 1 through a feed pipe 28, and the other end is used to discharge through a discharge pipe 29. For example, as shown in Fig. 1, there are 6 membrane tube bundle modules 23 and 4 concurrent heating modules 24, wherein the both ends of the two concurrent heating modules 24 (first concurrent heating modules) are respectively used to connect one membrane tube bundle module 23, and one end of the other two concurrent heating modules 24 (second concurrent heating modules) are used to connect the above-mentioned feed pipe 28 and discharge pipe 29 respectively. It can be understood that the total length of the pervaporation line, that is, the total number of the membrane tube bundle modules 23 connected in series, is determined by the purity requirements for the liquid retentate. That is, the higher the purity of the liquid retentate required, the longer the total length of the pervaporation line (the more membrane tube bundle modules 23 connected in series), and contrariwise the shorter (the less).

Furthermore, the membrane tube bundle module 23 is arranged in the vacuum vessel 21, and the concurrent heating module 24 is arranged in the concurrent heating vessel 22; in addition, the membrane tube bundle module 23 comprises one or multiple membrane tubes arranged in parallel, and the concurrent heating module 24 comprises one or multiple concurrent heating tubes arranged in parallel. Meanwhile, the number of the membrane tubes of the adjacent membrane tube bundle modules 23 is the same as that of the concurrent heating tubes of the concurrent heating module 24, so that the adjacent membrane tube bundle modules 23 can be connected to the concurrent heating module 24. It can be understood that under the condition that the size of the membrane tube and the concurrent heating tube remains unchanged, the number of membrane tubes arranged in parallel and the number of concurrent heating tubes arranged in parallel are also determined according to the requirements for the processing speed of the liquid feed. For example, in applications that require high processing speed of liquid feed, more membrane tubes should be connected in parallel in the membrane tube bundle module 23. In addition, at least one membrane tube should be arranged.

Furthermore, the side wall of the vacuum vessel 21 is connected to the inlet end of the condenser 3 through a pipeline, so that the steam generated during pervaporation separation can enter the condenser 3 for condensation and liquefaction, and the outlet end of the condenser 3 is connected to the vacuum pump 4 through a pipeline. With this arrangement, not only the steam generated in the membrane separator 2 is sucked into the condenser 3 due to negative pressure adsorption of the vacuum pump 4, but also the degree of vacuum in the membrane separator 2 can be maintained.

In the Embodiment, the vacuum vessel 21 and the concurrent heating vessel 22 are both shell-shaped vessels, and the concurrent heating vessel 22 is fixedly connected to the vacuum vessel 21. For example, the vacuum vessel 21 is a vessel with an open bottom surface, the concurrent heating vessel 22 is a vessel with an open top surface, and the bottom surface of the vacuum vessel 21 and the top surface of the concurrent heating vessel 22 are sealed with a partition plate 25 and are fixedly connected with bolts or by means of welding. In another embodiment, the vacuum vessel 21 is arranged below and the concurrent heating vessel 22 is arranged above. Wherein, the concurrent heating vessel 22 is provided with a heating medium inlet for connecting the heating medium inlet pipe 26 and a heating medium outlet for connecting the heating medium outlet pipe 27. It can be understood that, as shown in Fig. 1, both ends of the concurrent heating tubes in the concurrent heating modules 24 (first concurrent heating module) located in the middle are all arranged to pierce through the partition plate 25 with a U shape, so as to facilitate connecting the membrane tube bundle module 23 located in the vacuum vessel 21; and the other ends of the concurrent heating tubes in the concurrent heating module 24 (second concurrent heating module) located on both sides pass through the side wall of the concurrent heating vessel 22, so as to facilitate connecting the above-mentioned feed pipe 28 and discharge pipe 29.

In the Embodiment, the membrane tube bundle module 23 further comprises a tube bundle plate, the tube bundle plate is provided with mounting holes for installing the membrane tubes, and the tube bundle plate is fixed with flanges, so that the membrane tube is fixed by the tube bundle plate and then fixedly connected to the vacuum vessel 21 (specifically, one side of the surface of the partition plate 25) with flanges. Similarly, the concurrent heating module 24 also adopts the same structure. The difference lies in that its flanges are fixedly connected to the other side of the surface of the partition plate 25, and the partition plate 25 is provided with through holes so that the end of the concurrent heating tube can be connected to the matching membrane tube after passing through, or, the matching concurrent heating tube can be connected to the membrane tube in the through hole on the partition plate 25.

Furthermore, it can be understood that when there are two or more membrane tube bundle modules 23 arranged between two adjacent concurrent heating modules 24, the two or more membrane tube bundle modules 23 should also be connected. Therefore, in the Embodiment, the two or more membrane tube bundle modules 23 are connected in series through the connecting module 20. That is, the connecting module 20 is placed in the vacuum vessel 21, and the connecting module 20 also comprises one or multiple connecting tubes arranged in parallel. Specifically, the number of the connecting tubes of the connecting module 20 is the same as that of the membrane tubes of the membrane tube bundle module 23 to which they are connected, so that the connecting module 20 can be connected to the membrane tube bundle module 23. Similarly, the structure of the connecting module 20 is also the same as that of the membrane tube bundle module 23, with U-shaped connecting tubes. Flanges are provided at both ends to facilitate fixed connection with the flanges at the other end (upper end) of the membrane tube bundle module 23.

In the Embodiment, a metering pump 5 is also arranged at the upstream of the heater 1 to provide the heater 1 with continuous and accurate volume of liquid feed. It can be understood that direct gravity flow in the pipeline can also be used to supply liquid feed to the heater 1, and a control valve should be provided on the pipeline to regulate the supply speed of the liquid feed.

When in operation, the metering pump 5 pumps the liquid feed into the heater 1 for heating, and the liquid feed is heated by the heater 1 to a preset temperature, and then fed into the most upstream concurrent heating module 24 in the membrane separator 2 through the feed pipe 28 for concurrent heating to maintain the temperature, and then flows through the two membrane tube bundle modules 23 in the vacuum vessel 21 successively. At this time, due to pervaporation separation, the temperature of the liquid feed decreases to a certain extent, and then the liquid feed flows into the concurrent heating module 24 in the concurrent heating vessel 22 again to be heated, and then flows to the two membrane tube bundle modules 23 in the vacuum vessel 21, and the circulation goes on until the liquid feed reaches the predetermined purity requirement, flows out from the membrane separator 2 and is then discharged through the discharge pipe 29. In addition, when the membrane separator 2 is in operation, the vacuum pump 4 is in operation too. While the separated and vaporized component in the membrane separator 2 is sucked into the condenser 3 to be condensed and discharged, the vacuum pump 4 is also used to maintain the degree of vacuum in the membrane separator 2.

It can be understood that in the applications that require high processing speed of liquid feed, in the case that the size of the membrane tube (membrane area of a single membrane tube) remains unchanged, multiple membrane separators 2 can be arranged in parallel, so that the multiple membrane separators 2 can engage in the permeation separation process at the same time, thereby improving the processing speed; on the other hand, multiple pervaporation lines arranged in parallel can be arranged in the membrane separator 2, so that more membrane tube bundle modules 23 can engage in the pervaporation at the same time, thereby improving the processing speed.

In addition, it can be understood that, in order to ensure that the Reynolds number is within a reasonable range (for example, greater than 13000), when the amount of liquid feed reduces, the number of membrane tubes connected in parallel in the membrane tube bundle module 23 should reduce correspondingly, that is, in the pervaporation line, the number of membrane tubes connected in parallel in the membrane tube bundle module 23 should reduce sequentially from upstream to downstream.

### Embodiment 2

The difference between this Embodiment and Embodiment 1 lies in that: in this Embodiment, the system further comprises a heat exchanger 6, which is arranged between the metering pump 5 and the heater 1. The heat exchanger 6 comprises a cold medium pipe and a hot medium pipe. The inlet end of the hot medium pipe is connected to the discharge pipe 29, the outlet end of the cold medium pipe is connected to the heater 1 through a pipeline, and the outlet end of the metering pump 5 is connected to the inlet end of the cold medium pipe in the heat exchanger 6 through a pipeline.

With this arrangement, the cold liquid feed can be fully preheated by the waste heat of the liquid retentate (liquid product) discharged from the discharge pipe 29 before being heated by the heater 1 to realize heat recovery.

### Embodiment 3

On the basis of the above embodiments, the system further comprises a cooler 7, which is installed at the end of the system. The cooler 7 is used to carry out final cooling for the liquid retentate discharged from the discharge pipe 29 in the Embodiment 1, or the liquid retentate discharged from the hot medium pipe in the heat exchanger 6 in the Embodiment 2.

### Embodiment 4

An efficient and continuous tubular membrane pervaporation separation method is applied to the system disclosed in the above embodiments, and the method comprises the following steps:

Firstly, determining the number of membrane separators arranged in parallel and the number of membrane tubes connected in parallel in the membrane tube bundle module according to the requirements for the processing speed of the liquid feed and the processing capacity of the membrane separator, determining the length of the membrane tube according to the requirements for temperature drop of the liquid feed in the membrane tube, determining the total length of membrane tubes connected in series in the membrane separator according to the purity requirements for the final liquid product, and determining the structural composition of the tubular membrane pervaporation separation system according to the technical scheme disclosed in the Embodiment 2 above; wherein, the processing capacity of the membrane separator is the total effective membrane area of all membrane tubes in the membrane tube bundle module, and the length of a single membrane tube should be properly arranged so that the temperature drop of the liquid feed is controlled within the range of 20°C;

Then starting the vacuum pump to vacuumize the membrane separator, and feeding the liquid feed into the heater with a metering pump or by gravity flow, so that the liquid feed is heated to a preset temperature;

feeding the liquid feed heated to the preset temperature into the membrane separators arranged in parallel for pervaporation separation, so that the liquid product in compliance with requirements can be produced from the liquid feed after pervaporation separation, and while conducting pervaporation separation, feeding the heating medium into the membrane separator so that the liquid feed can be heated while flowing through the concurrent heating modules to maintain the temperature required;

while feeding the liquid feed into the membrane separator for pervaporation separation, the steam generated in the membrane separator due to the pervaporation separation is sucked into the condenser by the negative pressure generated by the vacuum pump to be condensed and discharged, and the degree of vacuum in the membrane separator is maintained at the same time.

In another embodiment, the above method further comprises: feeding the liquid feed before being heated by the heater and the liquid retentate (liquid product) flowing out from the membrane separator into the cold medium pipe and the hot medium pipe of the heat exchanger respectively, so as to utilize the waste heat of the liquid product to preheat the liquid feed.

The above is a detailed description for the embodiments of the Invention in combination with drawings, but not constitute any limitation to the embodiments of the Invention. For a person skilled in the art, various changes and amendments, replacements and deformations made under the premise of not departing from the spirit and essence of the Invention still fall within the protection scope of the Invention.

## Claims

1. An efficient and continuous tubular membrane pervaporation separation system, **characterized by** comprising a heater, one or multiple membrane separators arranged in parallel, a condenser and a vacuum pump;
wherein, the membrane separator comprises a vacuum vessel, a concurrent heating vessel and one or multiple pervaporation lines arranged in parallel; the pervaporation line comprises multiple membrane tube bundle modules and concurrent heating modules connected in series or in a series-parallel hybrid form, and in the pervaporation line, the one or multiple membrane tube bundle modules are arranged between two adjacent concurrent heating modules; the vacuum vessel is connected to the inlet end of the condenser through a pipeline, and the outlet end of the condenser is connected to the vacuum pump through a pipeline; the concurrent heating vessel is fixedly connected to the vacuum vessel, and the concurrent heating vessel is provided with a heating medium inlet and a heating medium outlet; one end of the pervaporation line is connected to the heater through a feed pipe, and the other end is used to discharge through a discharge pipe;
wherein, the membrane tube bundle module is placed in the vacuum vessel, and the membrane tube bundle module comprises one or multiple membrane tubes arranged in parallel; the concurrent heating module is placed in the concurrent heating vessel, and the concurrent heating module comprises one or multiple concurrent heating tubes arranged in parallel; and the number of the membrane tubes of the membrane tube bundle module is the same as that of the concurrent heating tubes of the concurrent heating module, so that the membrane tube bundle module can be connected to the concurrent heating module.

2. The system according to Claim 1, **characterized by** further comprising a heat exchanger; the heat exchanger comprises a cold medium pipe and a hot medium pipe; the inlet end of the hot medium pipe is connected to the discharge pipe, and the outlet end of the cold medium pipe is connected to the heater through a pipeline;

3. The system according to Claim 2, **characterized by** further comprising a metering pump and a cooler; the outlet end of the metering pump is connected to the inlet end of the cold medium pipe in the heat exchanger through a pipeline; the inlet end of the cooler is connected to the outlet end of the hot medium pipe in the heat exchanger through a pipeline.

4. The system according to Claim 1, wherein: when two or more membrane tube bundle modules are arranged between two adjacent concurrent heating modules, the two or more membrane tube bundle modules are connected in series through connecting modules; the connecting module is placed in the vacuum vessel and comprises one or multiple connecting tubes arranged in parallel, and the number of the connecting tubes of the connecting module is the same as that of the membrane tubes of the membrane tube bundle module, so that the connecting module can be connected to the membrane tube bundle module.

5. The system according to Claim 1, wherein: the bottom surface of the vacuum vessel and the top surface of the concurrent heating vessel are both open, and the bottom surface of the vacuum vessel and the top surface of the concurrent heating vessel are sealed with a partition plate and fixedly connected.

6. The system according to Claim 5, wherein: the membrane tube bundle module further comprises a tube bundle plate; the tube bundle plate is provided with mounting holes for installing the membrane tubes and is fixedly connected to the vacuum vessel with flanges.

7. The system according to Claim 1, wherein: in the pervaporation line, the number of parallel membrane tubes in the membrane tube bundle module remains unchanged or decreases successively from upstream to downstream.

8. An efficient and continuous tubular membrane pervaporation separation method, wherein: the method is applied to the system according to any of claims 1-7, and the method comprises the following steps:
determining the number of membrane separators arranged in parallel and the number of membrane tubes connected in parallel in the membrane tube bundle module according to the requirements for the processing speed of the liquid feed and the processing capacity of the membrane separator, determining the length of the membrane tube or the number of membrane tubes connected in series between adjacent concurrent heating tubes according to the requirements for temperature drop of the liquid feed in the membrane tube, and determining the total length of membrane tubes connected in series in the membrane separator according to the purity requirements for the final liquid product;
feeding the liquid feed into the heater and heating the liquid feed to the preset temperature;
feeding the liquid feed heated to the preset temperature into the membrane separators arranged in parallel for pervaporation separation, so that the liquid product in compliance with requirements can be produced from the liquid feed after pervaporation separation, and while conducting pervaporation separation, feeding the heating medium into the membrane separator so that the liquid feed can be heated while flowing through the concurrent heating modules to maintain the temperature required;
while feeding the liquid feed into the membrane separator for pervaporation separation, starting the vacuum pump; the steam generated in the membrane separator due to the pervaporation separation is condensed by the condenser and then discharged, and the vacuum pump draws out the non-condensable gas and maintains the degree of vacuum in the membrane separator.

9. The method according to Claim 8, wherein: the length of the membrane tubes between adjacent concurrent heating tubes is properly arranged so that the temperature drop of the liquid feed is controlled within the range of 20°C.

10. The method according to Claim 8, wherein: the method further comprises: feeding the liquid feed before being heated by the heater and the liquid product flowing out from the membrane separator into the cold medium pipe and the hot medium pipe of the heat exchanger respectively, so as to utilize the waste heat of the liquid product to preheat the liquid feed.
